# EUROPEAN PATENT APPLICATION

(11) **EP 4 755 863 A1**
(43) Date of publication of application: **10.06.2026**
(21) Application number: 23948969.3
(22) Date of filing: 26.09.2023
(51) Int. Cl.: C04B 7/43, F27D 7/06, F27B 19/04

(54) **EFFICIENT CLAY SUSPENSION CALCINING SYSTEM CAPABLE OF CONTROLLING COLOR OF PRODUCT**

(30) Priority: 16.08.2023 CN 202311029095
(71) Applicant: CBMI Construction Co., Ltd., Tangshan, Hebei 064000 (CN)
(72) Inventor: ZHANG, Chao, Tangshan, Hebei 064000 (CN); WANG, Bin, Tangshan, Hebei 064000 (CN); DENG, Yuhua, Tangshan, Hebei 064000 (CN); YANG, Zhi, Tangshan, Hebei 064000 (CN); LI, Runguo, Tangshan, Hebei 064000 (CN); CHI, Daliang, Tangshan, Hebei 064000 (CN); ZHANG, Wanjun, Tangshan, Hebei 064000 (CN); ZHENG, Xianming, Tangshan, Hebei 064000 (CN); WANG, Guomin, Tangshan, Hebei 064000 (CN); SUN, Xuecheng, Tangshan, Hebei 064000 (CN)
(74) Representative: Maiwald GmbH
(86) International application number: PCT/CN2023/121373
(87) International publication number: WO 2025/035546

(57) **Abstract**

The present disclosure provides a high-efficiency clay suspension calcination system capable of controlling color of product, relates to the technical field of clay calcination. The present disclosure adopts the concept of controlling the combustion atmosphere by splitting air, and the excess air coefficient of the main combustion chamber is controlled to be less than 1, enabling calcination in a reducing atmosphere and controlling the color of clay product. At the same time, the air is divided to a carbon monoxide elimination chamber, so that the excess air coefficient therein is more than 1.15, so as to eliminating unburnt carbon monoxide, and to reduce fuel consumption. The calcined clay first enters a first-stage heat exchanger to reduce the temperature of calcined clay to below 300°C through indirect heat exchange. The heat transfer oil heated after the first-stage heat exchanger passes through a second-stage heat exchanger and a third-stage heat exchanger for heat recovery. The second-stage heat exchanger raises the temperature of the air entering the main combustion chamber and the carbon monoxide elimination chamber, which improves the fuel combustion efficiency.

## Description

### TECHNICAL FIELD

The present disclosure relates to the technical field of clay calcination, specifically relates to a high-efficiency clay suspension calcination system capable of controlling color of product.

### BACKGROUND

When the clay is calcined in a reducing atmosphere and cooled to below 300°C through an indirect heat exchange, the product is gray, and after the product is mixed with clinker and ground into cement, the color of the cement is not affected; and if the clay is in an oxidizing atmosphere during calcination and is cooled to below 300 °C in an air atmosphere directly and under an oxidizing atmosphere, the resulting product is reddish brown, and after the resulting product is mixed with clinker and ground into cement, the color of the cement will be affected.

Therefore, there is a need for a calcination solution that could meet the requirements of a calcination in a reducing atmosphere with a high fuel burn-out rate, and is in the form of indirect heat exchange for cooling to below 300°C. However, in the existing clay calcination systems, it is the problem of oxidative atmosphere calcination, low fuel burn-out rate, difficult color control and low heat recovery.

### SUMMARY

In view of the above, it is an object of the present disclosure to propose a high-efficiency clay suspension calcination system with controlled product color to solve the above problem.

For the above objectives, the present disclosure provides a high-efficiency clay suspension calcination system capable of controlling color of product, comprising: a first-stage cyclone cylinder, a second-stage cyclone cylinder, a third-stage cyclone cylinder, a carbon monoxide elimination chamber, a main combustion chamber, a first-stage heat exchanger, a heat recovery system and a suspension cooling system; wherein a first gas channel is connected between the top of the first-stage cyclone cylinder and the top of the second-stage cyclone cylinder, and the first gas channel is provided with a clay feeding inlet; the carbon monoxide elimination chamber is connected between the top of the second-stage cyclone cylinder and the top of the third-stage cyclone cylinder, and the material discharged from the bottom of the first-stage cyclone cylinder is fed into the bottom of the carbon monoxide elimination chamber; the material discharged from the bottom of the second-stage cyclone cylinder is fed into the main combustion chamber, and the outlet of the main combustion chamber is in communication with the inlet of the third-stage cyclone cylinder, and the material discharged from the bottom of the third-stage cyclone cylinder is fed into the inlet at the top of the first-stage heat exchanger; the first-stage heat exchanger is in communication with the heat recovery system, and the bottom of the first-stage heat exchanger is in communication with the suspension cooling system; and a second gas channel is connected between the heat recovery system and the main combustion chamber, and a third gas channel is connected between the heat recovery system and the suspension cooling system.

Compared with the prior art, the advantages of the present disclosure are that: the present disclosure adopts the concept of controlling the combustion atmosphere by splitting air, and by the provision of a carbon monoxide elimination chamber, the subsequent carbon monoxide elimination equipment and fuel consumption are reduced, the investment and the fuel consumption are reduced. Meanwhile, the clay main combustion chamber is controlled to be in a reducing atmosphere to effectively control the color of the clay product. The calcined high-temperature clay first enters the first-stage heat exchanger, and the temperature of the calcined clay is reduced to below 300 °C through indirect heat exchange. The heat transfer oil heated after the first-stage heat exchanger passes through a second-stage heat exchanger and a third-stage heat exchanger for heat recovery. The second-stage heat exchanger improves the temperature of the air entering the main combustion chamber and the carbon monoxide elimination chamber, thereby improving the fuel combustion efficiency. Therefore, the present disclosure meets the requirements of calcining in a reducing atmosphere, cooling to below 300°C in an indirect heat exchange form, and at the same time, the fuel can obtain a higher burn-out rate, and the heat from the cooled calcined clay can also be fully recovered.

Further, the heat recovery system comprises the second-stage heat exchanger, the third-stage heat exchanger and a heat transfer oil storage tank, and the heat transfer oil outlet of the first-stage heat exchanger is in communication with the heat transfer oil inlet of the second-stage heat exchanger; the heat transfer oil outlet of second-stage heat exchanger is in communication with the heat transfer oil inlet of the third-stage heat exchanger, and the top outlet of the third-stage heat exchanger is in communication with a first high-temperature gas channel, and after the air is heat exchanged through the third-stage heat exchanger, it enters into a raw material drying and exhaust gas treatment system through the first high-temperature gas channel; the heat transfer oil outlet of the third stage heat exchanger is in communication with the inlet of the heat transfer oil storage tank, and the outlet at the bottom of the heat transfer oil storage tank is in communication with the heat transfer oil inlet of the first-stage heat exchanger.

Further,two ends of the second gas channel are respectively in communication with the top of the second-stage heat exchanger and the bottom of the main combustion chamber, and the second gas channel is in communication with a first branch, and an end of the first branch is in communication with the carbon monoxide elimination chamber.

Further, the suspension cooling system comprises a fourth-stage cyclone cylinder and a fifth-stage cyclone cylinder, the third gas channel is connected between the bottom of the second-stage heat exchanger and the top of the fourth-stage cyclone cylinder, the third gas channel is in communication with a second branch, and an end of the second branch is in communication with the first high-temperature gas channel; a fourth gas channel is connected between the fourth-stage cyclone cylinder and the top of the fifth-stage cyclone cylinder, and a first discharging channel is in communication with the bottom of the first-stage heat exchanger, and an end of the first discharging channel is in communication with the fourth gas channel; and a second discharging channel is connected between the bottom of the fourth-stage cyclone cylinder and the top of the fifth-stage cyclone cylinder, the top of the fifth-stage cyclone cylinder is in communication with a first ambient temperature air channel, and a finished product conveying channel is in communication with the bottom of the fifth-stage cyclone cylinder.

Further, the top of the first-stage cyclone cylinder is in communication with a second high-temperature gas channel, and the end of the second high-temperature gas channel is in communication with the raw material drying and exhaust gas treatment system.

### BRIEF DESCRIPTION OF THE DRAWINGS

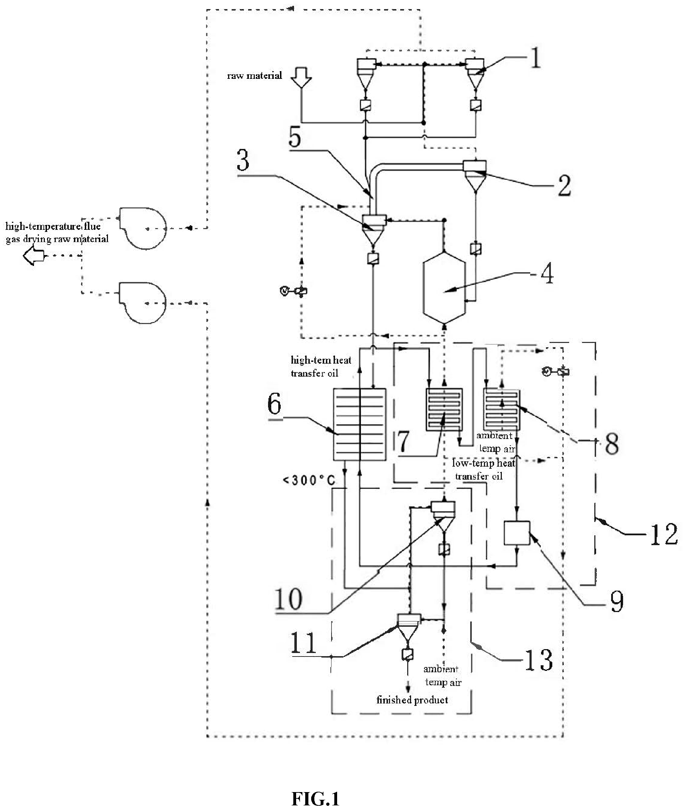

FIG. 1 is a schematic diagram of a high-efficiency clay suspension calcination system capable of controlling color of product according to an embodiment of the present disclosure.

### Description of the reference numbers in the Figure:

1. first-stage cyclone cylinder;
2. second-stage cyclone cylinder;
3. third-stage cyclone cylinder;
4. main combustion chamber;
5. carbon monoxide elimination chamber;
6. first-stage heat exchanger;
7. second-stage heat exchanger;
8. third-stage heat exchanger;
9. heat transfer oil storage tank;
10. fourth-stage cyclone cylinder;
11. fifth-stage cyclone cylinder;
12. heat recovery system;
13. suspension cooling system.

### DESCRIPTION OF EMBODIMENTS

To make the objectives, technical solutions, and advantages of the present disclosure clearer and more understandable, the present disclosure is further described in detail with reference to specific embodiments.

As shown in FIG. 1, the present disclosure provides a high-efficiency clay suspension calcination system capable of controlling color of product, which consists of a first-stage cyclone cylinder 1, a second-stage cyclone cylinder 2, a third-stage cyclone cylinder 3, a carbon monoxide elimination chamber 5, a main combustion chamber 4, a first-stage heat exchanger 6, a heat recovery system 12, and a suspension cooling system 13 and the like. The first-stage cyclone cylinder 1 adopts a high-efficiency dust-collecting double cyclone cylinder, and the top of the first-stage cyclone cylinder 1 is in communication with the second high-temperature gas channel, and the high-temperature flue gas in the second high-temperature gas channel is used for drying raw material. A first gas channel is connected between the inlet of the first-stage cyclone cylinder 1 and the outlet of the second-stage cyclone cylinder 2, and the raw material feeding point is provided on the first gas channel.

The carbon monoxide elimination chamber 5 is connected between the inlet of the second-stage cyclone cylinder 2 and the outlet of the third-stage cyclone cylinder 3, and a fifth discharging channel is connected between the carbon monoxide elimination chamber 5 and the bottom of the first-stage cyclone cylinder 1. The carbon monoxide elimination chamber 5 is of a pipe-type structure, and an end of the fifth discharging channel is in communication with an end close to the third-stage cyclone cylinder 3 of the carbon monoxide elimination chamber 5. By providing the carbon monoxide elimination chamber 5, the subsequent carbon monoxide elimination equipment and fuel consumption are reduced, thereby reducing the investment and lowering the fuel consumption.

A sixth discharging channel is connected between the bottom of the second-stage cyclone cylinder 2 and the lower portion of the main combustion chamber 4, and a fifth gas channel and a third discharging channel are respectively connected between the third-stage cyclone cylinder 3 and the top of the main combustion chamber 4. A fourth discharging channel is connected between the bottom of the third-stage cyclone cylinder 3 and the top of the first-stage heat exchanger 6, the first-stage heat exchanger 6 is in communication with a heat recovery system 12. A second gas channel is connected between the heat recovery system 12 and the main combustion chamber 4, and a third gas channel is connected between the heat recovery system 12 and the suspension cooling system 13.

The heat recovery system 12 consists of a second-stage heat exchanger 7, a third-stage heat exchanger 8 and a heat transfer oil storage tank 9 and the like, the top of the first-stage heat exchanger 6 is in communication with the top of the second-stage heat exchanger 7, the bottom of the second-stage heat exchanger 7 is in communication with the top of the third-stage heat exchanger 8, the bottom of the third-stage heat exchanger 8 is in communication with the top of the heat transfer oil storage tank 9, and the bottom of the heat transfer oil storage tank 9 is in communication with the bottom of the first-stage heat exchanger 6. The second gas channel is connected between the top of the second-stage heat exchanger 7 and the bottom of the main combustion chamber 4, the second gas channel is in communication with a first branch, and the end of the first branch is in communication with the carbon monoxide elimination chamber 5. The bottom of the third-stage heat exchanger 8 is in communication with a second ambient temperature air channel, the top of the third-stage heat exchanger 8 is in communication with a first high-temperature gas channel, and high-temperature flue gas in the first high-temperature gas channel is used for drying the raw material.

The temperature of the calcined high-temperature clay is reduced to below 300°C through indirect heat exchange in the first-stage heat exchanger 6. The heat transfer medium utilizes heat-conduction oil, and heat in the first-stage heat exchanger 6 is transferred from the high-temperature calcined clay to the heat-conduction oil, thereby creating conditions for heat recovery. The heated heat transfer oil enters the second-stage heat exchanger 7, and exchanges heat with the air exhausted by the suspension cooling system 13 through the third gas channel, and temperature of the air is increased again, and heat recovery is achieved. The heat-exchanged heat transfer oil enters the third-stage heat exchanger 8 for heat recovery, and the heat transfer oil exchanges heat with ambient temperature air introduced into the third-stage heat exchanger 8 to obtain high-temperature air for drying the raw material.

The suspension cooling system 13 consists of a fourth-stage cyclone cylinder 10, a fifth-stage cyclone cylinder 11 and the like, the third gas channel is connected between the bottom inlet of the second-stage heat exchanger 7 and the top outlet of the fourth-stage cyclone cylinder 10, the third gas channel is in communication with a second branch, and the end of the second branch is in communication with the first high-temperature gas channel. A fourth gas channel is connected between the inlet of the fourth-stage cyclone cylinder 10 and the top outlet of the fifth-stage cyclone cylinder 11, the bottom outlet of the first-stage heat exchanger 6 is in communication with a first discharging channel, and the end of the first discharging channel is in communication with the fourth gas channel. A second discharging channel is connected between the bottom of the fourth-stage cyclone cylinder 10 and the top of the fifth-stage cyclone cylinder 11, a first ambient temperature air channel is in communication with the top of the fifth-stage cyclone cylinder 11, and a finished product conveying channel is in communication with the bottom of the fifth-stage cyclone cylinder 11.

Process of the utilization: Step 1: the raw material is fed into the first gas channel, and the material is heat exchanged therein and enter the second-stage cyclone cylinder 2 with the gas, and the material is discharged from the discharge port of the second-stage cyclone cylinder 2.

Step 2: the discharged material enters the main combustion chamber 4, and the main combustion chamber 4 carries out calcination in a reducing atmosphere, and the clay is calcined and activated therein, and the clay is gray after calcination and activation. Step 3: the calcined and activated clay enters the third-stage cyclone cylinder 3 and is discharged from the discharge port thereof, and flue gas is discharged from the top outlet of the third-stage cyclone cylinder 3 and enters the carbon monoxide elimination chamber 5.

Step 4: most of the hot air from the second-stage heat exchanger 7 enters the main combustion chamber 4, the excess air coefficient of the main combustion chamber 4 is controlled to be less than 1, and the fuel is combusted in a slightly anoxic state, so that the clay is calcined under a reducing atmosphere. A small portion of the hot air also enters the carbon monoxide elimination chamber 5, and CO from the flue gas from the outlet of the third-stage cyclone cylinder 3 is eliminated under an oxygen atmosphere. The bottom of the carbon monoxide elimination chamber 5 is supplemented with a certain amount of hot air, such that the flue gas entering the carbon monoxide elimination chamber 5 reaches an oxidizing atmosphere and the excess air coefficient is more than 1.15, and CO is eliminated at a high temperature of about 800°C, so as to make the fuel fully combusted and to reduce the heat consumption of the system.

Step 5: the hot calcined clay discharged from the third-stage cyclone cylinder 3 enters the first-stage heat exchanger 6, which utilizes indirect heat exchange, and the heat-exchanging medium is the heat transfer oil for cooling the calcined clay from 800 °C to less than 300°C under the non-oxidizing atmosphere. Magnetite is gray in color and unstable above 300°C, and will be oxidized to hematite and reddish-brown in oxidizing atmosphere, so the above mentioned indirect cooling and heat exchange process should be used to achieve cooling and color control.

Step 6: in the first-stage heat exchanger 6, heat is transferred from the high-temperature calcined clay to the heat transfer oil, and the heat transfer oil enters the second-stage heat exchanger 7 and exchanges heat with hot air from the outlet of the fourth-stage cyclone cylinder 10 again, and the air temperature rises again, so as to achieve the recovery of heat and to improve the combustion efficiency of the calcination system.

Step 7: the heat transfer oil after heat exchange passes through the third-stage heat exchanger 8 again for heat recovery, the heat heats up air at the ambient temperature to get high-temperature air, and the high-temperature air is used for drying the raw material. The heat-exchanged heat transfer oil is recycled to the first-stage heat exchanger 6 again through the heat transfer oil storage tank 9 for the next cycle.

Step 8, the calcined clay cooled by the first-stage heat exchanger 6 enters the fourth gas channel, and the cooled calcined clay continues to be cooled by heat exchange therein and enters the fourth-stage cyclone cylinder 10 along with the air, and the cooled calcined clay is collected and then discharged from the lower discharge port of the four-stage cyclone cylinder. A part of the air after heat exchange enters the second-stage heat exchanger 7 for heat exchange and heating, and the other part thereof enters the raw material drying system, and is used for drying the raw material together with the high-temperature exhaust gas from the first-stage cyclone cylinder 1.

Step 9: the cooled calcined clay discharged from the lower of the fourth-stage cyclone cylinder 10 enters the second discharging channel, and is further cooled by heat exchange therein, and enters the fifth-stage cyclone cylinder 11 along with the air, and the cooled calcined clay is collected and then discharged from the lower discharge port of the fifth-stage cyclone cylinder 11 to complete final cooling as a product discharged from the system.

Therefore, the technical solutions of the present disclosure meet the following requirements: calcining in a reducing atmosphere, indirectly cooling to 300°C or less, and further improving the hot air temperature under indirect heating simultaneously, recovering heat, and improving combustion efficiency.

The embodiments of the present disclosures are intended to cover all alternatives, modifications and variations that fall within the broad scope of the appended claims. Therefore, any omissions, modifications, equivalent replacements, improvements and the like made within the spirit and principle of the present disclosure shall fall within the protection scope of the present disclosure.

## Claims

1. A high-efficiency clay suspension calcination system capable of controlling color of product, comprising: a first-stage cyclone cylinder, a second-stage cyclone cylinder, a third-stage cyclone cylinder, a carbon monoxide elimination chamber, a main combustion chamber, a first-stage heat exchanger, a heat recovery system and a suspension cooling system, **characterized in that**,
a first gas channel is connected between the top of the first-stage cyclone cylinder and the top of the second-stage cyclone cylinder, and the first gas channel is provided with a clay feeding inlet; the carbon monoxide elimination chamber is connected between the top of the second-stage cyclone cylinder and the top of the third-stage cyclone cylinder, and an material discharged from the bottom of the first-stage cyclone cylinder is fed into the bottom of the carbon monoxide elimination chamber; an material discharged from the bottom of the second-stage cyclone cylinder is fed into the main combustion chamber, and an outlet of the main combustion chamber is in communication with an inlet of the third-stage cyclone cylinder, and an material discharged from the bottom of the third-stage cyclone cylinder is fed into an inlet at the top of the first-stage heat exchanger; the first-stage heat exchanger is in communication with the heat recovery system, and the bottom of the first-stage heat exchanger is in communication with the suspension cooling system; and a second gas channel is connected between the heat recovery system and the main combustion chamber, and a third gas channel is connected between the heat recovery system and the suspension cooling system.

2. The high-efficiency clay suspension calcination system capable of controlling color of product according to claim 1, **characterized in that**, the heat recovery system comprises a second-stage heat exchanger, a third-stage heat exchanger and a heat transfer oil storage tank, an heat transfer oil outlet of the first-stage heat exchanger is in communication with an heat transfer oil inlet of the second-stage heat exchanger; the heat transfer oil outlet of second-stage heat exchanger is in communication with an heat transfer oil inlet of the third-stage heat exchanger, and an top outlet of the third-stage heat exchanger is in communication with a first high-temperature gas channel, and after the air is heat exchanged through the third-stage heat exchanger, the air enters into a raw material drying and exhaust gas treatment system through the first high-temperature gas channel; the heat transfer oil outlet of the third stage heat exchanger is in communication with an inlet of the heat transfer oil storage tank, and an outlet at the bottom of the heat transfer oil storage tank is in communication with a heat transfer oil inlet of the first-stage heat exchanger.

3. The high-efficiency clay suspension calcination system capable of controlling color of product according to claim 2, **characterized in that**, two ends of the second gas channel are respectively in communication with the top of the second-stage heat exchanger and the bottom of the main combustion chamber, and the second gas channel is in communication with a first branch, and an end of the first branch is in communication with the carbon monoxide elimination chamber.

4. The high-efficiency clay suspension calcination system capable of controlling color of product according to claim 2, **characterized in that**, the suspension cooling system comprises a fourth-stage cyclone cylinder and a fifth-stage cyclone cylinder, the third gas channel is connected between the bottom of the second-stage heat exchanger and the top of the fourth-stage cyclone cylinder, the third gas channel is in communication with a second branch, and an end of the second branch is in communication with the first high-temperature gas channel; a fourth gas channel is connected between the fourth-stage cyclone cylinder and the top of the fifth-stage cyclone cylinder, and a first discharging channel is in communication with the bottom of the first-stage heat exchanger, and an end of the first discharging channel is in communication with the fourth gas channel; and a second discharging channel is connected between the bottom of the fourth-stage cyclone cylinder and the top of the fifth-stage cyclone cylinder, the top of the fifth-stage cyclone cylinder is in communication with a first ambient temperature air channel, and a finished product conveying channel is in communication with the bottom of the fifth-stage cyclone cylinder.

5. The high-efficiency clay suspension calcination system capable of controlling color of product according to claim 2, **characterized in that**, the top of the first-stage cyclone cylinder is in communication with a second high-temperature gas channel, and the end of the second high-temperature gas channel is in communication with the raw material drying and exhaust gas treatment system.
